# EUROPÄISCHE PATENTSCHRIFT

(11) **EP 1 283 076 B1**
(45) Veröffentlichungstag und Bekanntmachung des Hinweises auf die Patenterteilung: **27.09.2006**
(21) Anmeldenummer: 02011425.2
(22) Anmeldetag: 24.05.2002
(51) Int. Cl.: B08B 17/00, B08B 17/06, B05D 7/02, B05D 5/08

(54) **Selbstreinigende Oberflächen durch hydrophobe Strukturen und Verfahren zu deren Herstellung**
Self cleaning surfaces due to hydrophobic structures and method for the preparation thereof
Surfaces auto-nettoyantes grâce à des structures hydrophobes et leur procédé de préparation

(30) Priorität: 16.07.2001 DE 10134477
(43) Veröffentlichungstag der Anmeldung: 12.02.2003
(73) Patentinhaber: Degussa AG, 40474 Düsseldorf (DE)
(72) Erfinder: Nun, Edwin, Dr., 48727 Billerbeck (DE); Oles, Markus, Dr., 45525 Hattingen (DE); Schleich, Bernhard, Dr., 45657 Recklinghausen (DE)

(56) Entgegenhaltungen:
- EP-A- 1 249 280
- WO-A-00/63312

## Beschreibung

Die vorliegende Erfindung betrifft selbstreinigende Oberflächen und Verfahren zu deren Herstellung. Insbesondere betrifft die vorliegende Erfindung selbstreinigende Oberflächen, die, trotz natürlicher Erosion, die Selbstreinigung über längere Zeit aufrechterhalten.

Gegenstände mit extrem schwer benetzbaren Oberflächen weisen eine Reihe von wirtschaftlich bedeutsamen Merkmalen auf. Das wirtschaftlich bedeutendste Merkmal ist dabei die selbstreinigende Wirkung von schwerbenetzbaren Oberflächen, da die Reinigung von Oberflächen zeit- und kostenintensiv ist. Selbstreinigende Oberflächen sind somit von höchstem wirtschaftlichen Interesse. Haftmechanismen werden in der Regel durch grenzflächenenergetische Parameter zwischen den beiden sich berührenden Oberflächen bedingt. In der Regel versuchen dabei die Systeme ihre freie Grenzflächenenergie zu erniedrigen. Liegen die freien Grenzflächenenergien zwischen zwei Komponenten von sich aus schon sehr niedrig, so kann allgemein davon ausgegangen werden, dass die Haftung zwischen diesen beiden Komponenten schwach ausgeprägt ist. Wichtig ist dabei die relative Erniedrigung der freien Grenzflächenenergie. Bei Paarungen mit einer hohen und einer niedrigen Grenzflächenenergie kommt es sehr oft auf die Möglichkeiten der Wechselwirkungen an. So ist beispielsweise beim Aufbringen von Wasser auf eine hydrophobe Oberfläche nicht möglich, eine merkliche Erniedrigung der Grenzflächenenergie herbeizuführen. Dies ist daran erkennbar, dass die Benetzung schlecht ist. Aufgebrachtes Wasser bildet Tropfen mit sehr hohem Kontaktwinkel. Perfluorierte Kohlenwasserstoffe, z. B. Polytetrafluorethylen, haben sehr niedrige Grenzflächenenergie. Auf solchen Oberflächen haften kaum irgendwelche Komponenten bzw. auf solchen Oberflächen abgelagerte Komponenten können sehr leicht wieder entfernt werden.

Der Einsatz von hydrophoben Materialien, wie perfluorierten Polymeren, zur Herstellung von hydrophoben Oberflächen ist bekannt. Eine Weiterentwicklung dieser Oberflächen besteht darin, die Oberflächen im µm-Bereich bis nm-Bereich zu strukturieren. US-PS 5 599 489 offenbart ein Verfahren, bei dem eine Oberfläche durch Beschuss mit Partikeln einer entsprechenden Größe und anschließender Perfluorierung besonders abweisend ausgestattet werden kann. Ein anderes Verfahren beschreiben H. Saito et al in "Service Coatings International" 4, 1997, S. 168 ff. Hier werden Partikel aus Fluorpolymeren auf Metalloberflächen aufgebracht, wobei eine stark erniedrigte Benetzbarkeit der so erzeugten Oberflächen gegenüber Wasser mit einer erheblich reduzierten Vereisungsneigung festgestellt wurde.

In US-PS 3 354 022 und WO 96/04123 sind weitere Verfahren zur Erniedrigung der Benetzbarkeit von Gegenständen durch topologische Veränderungen der Oberflächen beschrieben. Hier werden künstliche Erhebungen bzw. Vertiefungen mit einer Höhe von ca. 5 bis 1 000 µm und einem Abstand von ca. 5 bis 500 µm auf hydrophobe oder nach der Strukturierung hydrophobierte Werkstoffe aufgebracht. Oberflächen dieser Art führen zu einer schnellen Tropfenbildung, wobei die abrollenden Tropfen Schmutzteilchen aufnehmen und somit die Oberfläche reinigen.

Dieses Prinzip ist der Natur entlehnt. Kleine Kontaktflächen erniedrigen die Van-der-Waal's-Wechselwirkung, die für die Haftung an ebenen Oberflächen mit niedriger Oberflächenenergie verantwortlich ist. Beispielsweise sind die Blätter der Lotus-Pflanze mit Erhebungen aus einem Wachs versehen, die die Kontaktfläche zu Wasser herabsetzen. WO 00/58410 beschreibt die Strukturen und beansprucht die Ausbildung selbiger durch Aufsprühen von hydrophoben Alkoholen, wie Nonakosan-10-ol, oder Alkandiolen, wie Nonakosan-5,10-diol. Die Strukturen weisen Abstände der Erhebungen im Bereich von 0,1 bis 200 µm und Höhen der Erhebungen von 0,1 bis 100 µm auf. Es werden allerdings keine Angaben über die geometrische Form der Erhebungen gemacht. Nachteilig ist die mangelhafte Stabilität der selbstreinigenden Oberflächen, da Detergentien zur Ablösung der Struktur führen.

Eine weitere Methode, leicht reinigbare Oberflächen zu erzeugen, ist in DE 199 17 367 A1 beschrieben. Überzüge auf Basis fluorhaltiger Kondensate sind aber nicht selbstreinigend. Die Kontaktfläche zwischen Wasser und Oberfläche ist zwar reduziert, jedoch nicht in ausreichendem Maße.

EP 1 040 874 A2 beschreibt das Abprägen von Mikrostrukturen und beansprucht die Verwendung solcher Strukturen in der Analytik (Mikrofluidik). Nachteilig an diesen Strukturen ist die ungenügende mechanische Stabilität.

Verfahren zur Herstellung der strukturierten Oberflächen sind ebenfalls bekannt. Neben der detailgetreuen Abformung dieser Strukturen durch eine Masterstruktur im Spritzguss oder Prägeverfahren sind auch Verfahren bekannt, die das Aufbringen von Partikeln auf einer Oberfläche nutzen, beispielsweise US 5 599 489. Allen Abformungsverfahren gemeinsam ist, dass das selbstreinigende Verhalten der Oberflächen durch ein sehr hohes Aspektverhältnis beschrieben werden kann und dass die Strukturen dreidimensional periodisch sind.

Hohe Aspektverhältnisse im dreidimensionalen Raum, d. h. hohe, schmale, isoliert stehende Objekte sind technisch nur schwer realisierbar und besitzen eine geringe mechanische Stabilität.

Zahlreiche neuere Arbeiten beschäftigen sich mit der dreidimensionalen Strukturierung von Oberflächen, so beispielsweise US 6 093 754. Hier wird eine dreidimensionale Struktur durch das mehrfache Bedrucken der Oberfläche erreicht, wobei einige der Druckfarben abstoßend auf die nächste Farbschicht wirken und so eine Struktur gebildet wird.

In FR 2792003 A1 beschreiben C. Bernard und D. Lebellac ein Verfahren, um strukturierte Oberflächen, die sowohl wasserabweisend als auch ölabweisend sind, durch Vakuumabscheidung mittels CVD-Technik herzustellen. Auch diese Schichten weisen nur eine mangelhafte mechanische Stabilität auf.

Mit abnehmendem Aspektverhältnis werden auch in der Regel die Schichten stabiler. Beispielsweise beschreibt Frank Burmeister et al in "Physikalische Blätter" 56 (2000), Nr. 4, 49ff, ein Verfahren, um mittels Kapillarkräften zu Nanostrukturen zu gelangen. Es wird hervorgehoben, dass sich Strukturen von einigen Atomlagen bis zum Partikelradius so variieren lassen, dass auch Strukturen mit einem Aspektverhältnis > 1 erzeugt werden können.

Allerdings wird auch hervorgehoben, dass derlei Prozesse nur für verhältnismäßig kleine Flächen einsetzbar sind, da anderenfalls im Trocknungsprozess sich Spannungsrisse ausbilden können.

Hideshi Hattore beschreibt in "Advanced Materials", 2001, 13, Nr. 1, Seiten 51ff, ein Verfahren, um elektrostatisch zu beschichten. Dabei wird hervorgehoben, dass es zu einer Selbstorganisation der Partikel kommt, wenn die zu beschichtende Oberfläche und die Partikel selber entgegengesetzte elektrische Vorzeichen tragen. Allerdings werden mit diesem Verfahren keine Aspektverhältnisse > 1 erzeugt, so dass diese Schichten nur Antireflexschichten sind.

Ein interessantes Verfahren selbstreinigende Oberflächen zu generieren, wird von Akira Nakajima, Langmuir 2000, 16, 5754 - 5760 beschrieben. Hier wird die Struktur durch Sublimation von Aluminiumacetylacetonat erzeugt. Gleichzeitig müssen dem hydrophoben Material 2 % Titandioxid zugegeben werden, um selbstreinigende Eigenschaften zu erzielen. Hierbei ist sicherlich nicht die Struktur und die Hydrophobie der Effektträger, sondern die katalytischen zersetzenden Eigenschaften des Titandioxids in Kombination mit Licht.

All diese negativen Eigenschaften sind bei der vorliegenden Erfindung nicht gegeben. In DE 101 18 351 und DE 101 18 352 wird beschrieben, dass stabile, selbstreinigende Oberflächen durch das Fixieren von Strukturbildnern, die eine zerklüftete Struktur aufweisen müssen, erhalten werden können. Werden hier hydrophobe Strukturbildner und hydrophobe Trägermaterialien verwandt, sind diese Oberflächen sowohl mechanisch als auch gegen Erosion durch Wind, Wetter und Licht einigermaßen stabil. Dennoch kann nicht verhindert werden, dass ein Abtragen der aktiven Schichten, insbesondere bei Schädigung durch UV-Licht, geschieht. Der Angriff durch Wind und Wetter führt, wie überall, zur allmählichen Glättung der Oberfläche und damit zum Nachlassen des Selbstreinigungseffektes. Die Wirkung der Selbstreinigung klingt asymptotisch ab. Welcher Grenzwert erreicht wird, ist abhängig davon, wie viel Reststruktur auf dem Träger verbleibt und wie hydrophob und wie glatt die Oberfläche dann ist.

Durch eine anfängliche Erosion einer "Deckschicht" werden in DE 199 44 169 A1 selbstreinigende Oberflächen geschaffen. Bei diesem Verfahren tritt der Effekt erst nach der Erosion auf. Durch weitere Erosion wird der Selbstreinigungseffekt wieder geringer bzw. verschwindet ganz. Eine Regeneration der selbstreinigenden Oberfläche findet nicht statt.

Aufgabe der vorliegenden Erfindung war deshalb die Bereitstellung von Oberflächenstrukturen, mit einer hohen mechanischen Stabilität, die auch nach natürlicher Erosion eine Selbstreinigung durch bewegtes Wasser aufweisen sowie ein einfaches Verfahren zur Herstellung solcher selbstreinigenden Oberflächen.

Überraschenderweise wurde gefunden, dass Oberflächenstrukturen, die den Strukturbildner auch in dem Träger aufweisen, einen Regenerationseffekt aufweisen, da durch eine Erosion die strukturbildenden Partikel zwar teilweise abgetragen werden, aber durch die Erosion auch neue, für den Selbstreinigungseffekt wirksame Partikel aus dem Träger freigelegt werden und sich der Selbstreinigungseffekt auf diese Weise selbst regeneriert.

Gegenstand der vorliegenden Erfindung ist deshalb eine selbstreinigende, Oberfläche mit selbstregenerierendem Selbstreinigungseffekt gemäß Anspruch 1, die eine künstliche, zumindest teilweise hydrophobe Oberflächenstruktur aus Erhebungen und Vertiefungen aufweist, wobei die Erhebungen und Vertiefungen durch mittels eines Trägers auf der Oberfläche fixierten Partikel gebildet werden, welche dadurch gekennzeichnet ist, dass der Träger ein Gemisch aus Partikeln und Binder aufweist.

Ebenfalls ist Gegenstand der vorliegenden Erfindung ein Verfahren zur Herstellung von selbstreinigenden Oberflächen, bei dem eine geeignete, zumindest teilweise hydrophobe Oberflächenstruktur durch Fixieren von Partikeln mittels eines Trägers auf einer Oberfläche geschaffen wird, welches dadurch gekennzeichnet ist, dass als Träger ein Gemisch aus Partikeln und Binder eingesetzt wird.

Unter Selbstreinigungseffekt wird im Rahmen der vorliegenden Erfindung der Effekt der erschwerten Benetzbarkeit von Oberflächen verstanden. Durch die schlechte Benetzbarkeit der Oberflächen, insbesondere durch Wasser, werden Verschmutzungen, wie z. B. Staub, durch abrollende Flüssigkeitstropfen von der Oberfläche wieder entfernt. Die Flüssigkeit kann z. B. Regen sein.

Das erfindungsgemäße Verfahren hat den Vorteil, dass durch das intensive Einrühren von strukturbildenden Materialien (Partikeln) in das Bindersystem zu Lacksystemen (Trägern) führen, die a) eine exzellente Haftung zur Oberfläche haben und b) eine exzellente Haftung zu den zusätzlich aufgetragenen Partikeln besitzen. Auf diese Weise werden selbstreinigende Oberflächen erhalten, bei denen durch Erosion, die in der Natur durch UV-Licht und Windund Wettereinflüsse stattfindet, neue strukturbildende Partikel freigelegt werden und so eine Selbstregeneration des sogenannten Lotus-Effektes stattfindet. Es ist bei dem erfindungsgemäßen Verfahren nicht notwendig, wie in US-Patent 6 020 419 gefordert, die Strukturbildner agglomeratfrei im Träger zu dispergieren. Im Gegenteil, Agglomerate im Träger sind in der vorliegenden Erfindung erwünscht, da Agglomerate über entsprechend günstig strukturierte Oberflächen verfügen, wobei die Agglomerate Partikel im Größenbereich von < 50 µm sind und den Beschreibungen von DIN 53206 genügen. Da auch Agglomerate eingesetzt werden können, ist der Aufwand zur Herstellung von selbstreinigenden Oberflächen nach dem erfindungsgemäßen Verfahren wesentlich ökonomischer, da auf die aufwendige Zerschlagung der Agglomerate verzichtet werden kann.

Durch den selbstregenerierenden Selbstreinigungseffekt sind die erfindungsgemäßen selbstreinigenden Oberflächen besonders gut geeignet für Anwendungen in einer aggressiven Umgebung, insbesondere zur Anwendung im Freien. Die Witterungs- und Umwelteinflüsse führen bei selbstreinigenden Oberflächen nach dem Stand der Technik z. B. durch Erosion zu einer relativ schnellen Verschlechterung der selbstreinigenden Eigenschaften, da durch Erosion die Oberflächenstruktur, die die selbstreinigenden Eigenschaften bewirkt, verloren geht. Bei den erfindungsgemäßen Oberflächen regeneriert sich der Selbstreinigungseffekt von selbst, da durch die Erosion zwar Partikel abgetragen werden, aber aus dem ebenfalls abgetragenen Träger neue Partikel hervorkommen. Je nach Dicke der Trägerschicht und der Anzahl der darin enthaltenen Partikel bleibt der Selbstreinigungseffekt der erfindungsgemäßen Oberflächen wesentlich länger erhalten als bei herkömmlichen selbstreinigenden Oberflächen.
Im nachfolgenden werden Substanzen, die zur Fixierung von Partikeln auf einer Oberfläche eingesetzt werden, als Träger bezeichnet.

Die erfindungsgemäße selbstreinigende Oberfläche mit selbstregenerierendem Selbstreinigungseffekt, die eine künstliche, zumindest teilweise hydrophobe Oberflächenstruktur aus Erhebungen und Vertiefungen aufweist, wobei die Erhebungen und Vertiefungen durch mittels eines Trägers auf der Oberfläche fixierten Partikel gebildet werden, zeichnet sich dadurch aus, dass der Träger ein Gemisch aus Partikeln und Binder aufweist.

Die Partikel können Teilchen im Sinne von DIN 53 206 sein. Partikel oder Teilchen gemäß dieser Norm können Einzelteilchen aber auch Aggregate oder Agglomerate sein, wobei gemäß DIN 53 206 unter Aggregaten flächig oder kantenförmig aneinander gelagerte Primärteilchen (Partikel) und unter Agglomeraten punktförmig aneinandergelagerte Primärteilchen (Partikel) verstanden werden. Als Partikel können auch solche eingesetzt werden, die sich aus Primärteilchen zu Agglomeraten oder Aggregaten zusammenlagern. Die Struktur solcher Partikel kann sphärisch, streng sphärisch, mäßig aggregiert, nahezu sphärisch, äußerst stark agglomeriert oder porös agglomeriert sein. Die bevorzugte Größe der Agglomerate bzw. Aggregate liegt zwischen 20 nm und 100 µm, besonders bevorzugt zwischen 0,2 und 30 µm.

Die Partikel, die die Struktur bilden, weisen vorzugsweise eine zerklüftete Struktur mit Erhebungen und/oder Vertiefungen im Nanometerbereich auf. Vorzugsweise weisen die Erhöhungen im Mittel eine Höhe von 20 bis 500 nm, besonders bevorzugt von 50 bis 200 nm auf. Der Abstand der Erhöhungen bzw. Vertiefungen auf den Partikeln beträgt vorzugsweise weniger als 500 nm, ganz besonders bevorzugt weniger als 200 nm.

Die zerklüfteten Strukturen mit Erhebungen und/oder Vertiefungen im Nanometerbereich können z. B. über Hohlräume, Poren, Riefen, Spitzen und/oder Zacken gebildet werden. Die Partikel selbst weisen eine durchschnittliche Größe von kleiner 50 µm, vorzugsweise von kleiner 30 µm und ganz besonders bevorzugt von kleiner 20 µm auf. Die Partikel auf der Oberfläche weisen vorzugsweise Abstände von 0 - 10 Partikeldurchmessern, insbesondere von 0 - 3 Partikeldurchmesser auf.
Bevorzugt weisen die Partikel eine BET-Oberfläche von 50 bis 600 Quadratmeter pro Gramm auf. Ganz besonders bevorzugt weisen die Partikel eine BET-Oberfläche von 50 bis 200 m²/g auf.

Als strukturbildende Partikel können verschiedenste Verbindungen aus vielen Bereichen der Chemie eingesetzt werden. Vorzugsweise weisen die Partikel zumindest ein Material, ausgewählt aus Silikaten, dotierten Silikaten, Mineralien, Metalloxiden, Kieselsäuren, Polymeren und mit Kieselsäure beschichteten Metallpulvern, auf. Ganz besonders bevorzugt weisen die Partikel pyrogene Kieselsäuren oder Fällungskieselsäuren, insbesondere Aerosile, Al₂O₃, SiO₂, TiO₂, ZrO_{2,} mit Aerosil R974 ummanteltes Zinkpulver, vorzugsweise mit einer Teilchengrößen von 1 µm oder pulverförmige Polymere, wie z. B. kryogen gemahlenes oder sprühgetrocknetes Polytetrafluorethylen (PTFE) oder perfluorierte Copolymere bzw. Copolymere mit Tetrafluorethylen, auf.

Vorzugsweise weisen die Partikel zur Generierung der selbstreinigenden Oberflächen neben den zerklüfteten Strukturen auch hydrophobe Eigenschaften auf. Die Partikel können selbst hydrophob sein, wie z. B. PTFE aufweisende Partikel, oder die eingesetzten Partikel können hydrophobiert worden sein. Das Hydrophobieren der Partikel kann auf eine dem Fachmann bekannte Weise erfolgen. Typische hydrophobierte Partikel sind z. B. Feinstpulver wie Aerosil-R 8200 (Degussa AG), die käuflich zu erwerben sind.

Die vorzugsweise verwendeten Kieselsäuren weisen vorzugsweise eine Dibutylphthalat-Adsorption, angelehnt an DIN 53 601, von zwischen 100 und 350 ml/100 g, bevorzugt Werte zwischen 250 und 350 ml/100 g.

Die Partikel werden an der Oberfläche mittels eines Trägers fixiert. Durch Auftrag der Partikel auf die Oberfläche in einer dicht gepackten Schicht, lässt sich die selbstreinigende Oberfläche generieren. Erfindungsgemäß weist der Träger ein Gemisch aus Binder und Partikeln auf, wobei die Partikel die vorgenannten Partikel sein können. Das Gemisch aus Binder und Partikeln weist vorzugsweise von 1 bis 50 Gew.-%, besonders bevorzugt von 5 bis 25 Gew.-% und ganz besonders bevorzugt von 7,5 bis 15 Gew.-% Partikel bezogen auf das Gemisch auf.
Unter Bindern werden im Rahmen der vorliegenden Erfindung Lacke bzw. Lacksysteme oder Kleber bzw. Klebesysteme verstanden. Prinzipiell sind alle Lacksysteme oder Klebesysteme als Binder einsetzbar.

In einer bevorzugten Ausführungsart der erfindungsgemäßen selbstreinigenden Oberfläche ist der Binder ein mittels thermischer Energie und/oder Lichtenergie gehärteter Lack, ein Zweikomponenten-Lacksystem oder ein anderes reaktives Lacksystem, wobei die Härtung vorzugsweise durch Polymerisation oder Vernetzung erfolgt. Besonders bevorzugt weist der gehärtete Lack Polymerisate und/oder Copolymerisate aus einfach und/oder mehrfach ungesättigten Acrylaten und/oder Methacrylaten auf. Die Mischungsverhältnisse können in weiten Grenzen variiert werden. Ebenso ist es möglich, dass der gehärtete Lack Verbindungen mit funktionellen Gruppen, wie z. B. Hydroxy-Gruppen, Epoxid-Gruppen, Amin-Gruppen, oder fluorhaltige Verbindungen, wie z. B. perfluorierte Ester der Acrylsäure, aufweist. Dies ist insbesondere dann vorteilhaft, wenn die Verträglichkeit von Lack und hydrophoben Partikeln wie beispielsweise von Aerosil R 8200 mittels N-[2-(Acryloyloxy)-ethyl]-N-ethylperfluoroctan-1-sulfonsäureamid aufeinander abgestimmt werden. Als Lacke sind nicht nur Lacke auf Acrylharz-Basis einsetzbar, sondern auch Lacke auf Polyurethan-Basis oder aber Lacke, die Polyurethanacrylate oder Siliconacrylate aufweisen.

Die erfindungsgemäßen selbstreinigenden Oberflächen weisen einen Abrollwinkel von kleiner 20°, besonders bevorzugt kleiner 10° auf, wobei der Abrollwinkel so definiert ist, dass ein aus 1 cm Höhe auf eine auf einer schiefen Ebene ruhenden planen Oberfläche aufgebrachter Wassertropfen abrollt. Die Fortschreitwinkel und die Rückzugswinkel liegen oberhalb von 140°, bevorzugt oberhalb von 150° und weisen eine Hysterese von kleiner 15°, vorzugsweise kleiner 10° auf. Dadurch, dass die erfindungsgemäßen Oberflächen einen Fortschreit- und Rückzugswinkel oberhalb von zumindest 140°, vorzugsweise oberhalb von 150° aufweisen, werden besonders gute selbstreinigende Oberflächen zugänglich.

Je nach verwendetem Binder und je nach Größe und Material der eingesetzten Partikel kann erreicht werden, dass die selbstreinigenden Oberflächen semitransparent sind. Insbesondere können die erfindungsgemäßen Oberflächen kontakttransparent sein, dass heißt das nach Erstellen einer erfindungsgemäßen Oberfläche auf einem beschrifteten Gegenstand diese Beschriftung, in Abhängigkeit von der Größe der Schrift, weiterhin lesbar ist.

Um den Effekt der Selbstregeneration des Selbstreinigungseffektes erzielen zu können ist es notwendig, dass die Partikel und der Binder unterschiedliche Materialeigenschaften aufweisen. Die Unterschiede können mechanischer oder physikalischer als auch chemischer Natur sein. Um die Selbstregeneration zu erzielen ist es wichtig, dass der Binder (egal ob chemisch, mechanisch oder physikalisch) schneller abgetragen wird, als die in ihm vorhandenen Partikel. In Bezug auf die mechanische Stabilität weisen die Partikel deshalb vorzugsweise eine Härte auf, die 10 %, vorzugsweise 20 % und ganz besonders bevorzugt 50 % über der Härte des verwendeten Binders liegt. Auf diese Weise wird erreicht, dass durch Abrasion der an der Oberfläche liegende Binder schneller abgetragen wird als die Partikel und bei Verlust eines Partikels, neue Partikel, die den verlorenen ersetzen aus dem Binder hervortreten. Je nach dem, welchen Umwelteinflüssen die erfindungsgemäße Oberfläche ausgesetzt wird, können die Materialeigenschaften durch Auswahl und Kombination von verwendetem Binder und verwendeten Partikeln optimiert werden.

Einen eben solchen Effekt kann die unterschiedliche UV-Stabilität von Partikel und Binder hervorrufen. Die UV-Stabilität von Partikeln wie z. B. Aerosilen ist nicht begrenzt. Allerdings kann das UV-Licht durch die Partikel auf die Binderschicht geleitet werden, so dass dort eine Schädigung des Binders, der häufig eine Polymermatrix aufweist, erfolgen kann. Dadurch wird über die Zeit das Anhaften der strukturbildenden Partikel geschwächt und kann zum Herauslösen des Partikels aus dem Träger führen. An dieser Stelle ist die Oberfläche vorübergehend dem UV-Licht ausgesetzt. Dieses greift dann, wie üblich, die organische Verbindungen des Binders an. Durch die Zerstörung der entsprechenden Polymerketten werden allerdings neue Partikel an der Oberfläche freigelegt, welche als Strukturbildner wiederum für die selbstreinigenden Eigenschaften der Oberfläche sorgt.

Die UV-Durchlässigkeit von Partikel aus Quarz (Aerosilen) ist zwar hoch, jedoch erreichen durch die Partikel nur sehr wenige UV-Strahlen die polymere Trägermatrix, da durch die zahlreichen winklig versetzten Oberflächen der Partikel, und der damit verbundenen Lichtstreuung, nur ein geringer Teil der UV-Strahlung durch die Partikel hindurchdringt.
Die erfindungsgemäßen selbstreinigenden Oberflächen werden vorzugsweise durch das erfindungsgemäße Verfahren zur Herstellung dieser Oberflächen hergestellt. Dieses erfindungsgemäße Verfahren zur Herstellung von selbstreinigenden Oberflächen, bei dem eine geeignete, zumindest teilweise hydrophobe Oberflächenstruktur durch Fixieren von Partikeln mittels eines Trägers auf einer Oberfläche geschaffen wird, zeichnet sich dadurch aus, dass als Träger Gemische aus Partikeln und Binder, eingesetzt werden.

Vorzugsweise werden solche Partikel, die zumindest ein Material, ausgewählt aus Silikaten, dotierten Silikaten, Mineralien, Metalloxiden, Kieselsäuren oder Polymeren aufweisen, eingesetzt. Ganz besonders bevorzugt weisen die Partikel pyrogene Silikate oder Kieselsäuren, insbesondere Aerosile, Mineralien wie Magadiit Al₂O₃, SiO₂, TiO₂, ZrO₂ mit Aerosil R 974 ummanteltes Zn-Pulver oder pulverförmige Polymere, wie z. B. kryogen gemahlenes oder sprühgetrocknet Polytetrafluorethylen (PTFE), auf.

Besonders bevorzugt werden Partikel mit einer BET-Oberfläche von 50 bis 600 m²/g eingesetzt. Ganz besonders bevorzugt werden Partikel eingesetzt, die eine BET-Oberfläche von 50 bis 200 m²/g aufweisen.

Vorzugsweise weisen die Partikel zur Generierung der selbstreinigenden Oberflächen neben den zerklüfteten Strukturen auch hydrophobe Eigenschaften auf. Die Partikel können selbst hydrophob sein, wie z. B. PTFE aufweisende Partikel, oder die eingesetzten Partikel können hydrophobiert worden sein. Das Hydrophobieren der Partikel kann auf eine dem Fachmann bekannte Weise erfolgen. Typische hydrophobierte Partikel sind z. B. Feinstpulver wie Aerosil R 974 oder Aerosil-R 8200 (Degussa AG), die käuflich zu erwerben sind.

Das erfindungsgemäße Verfahren weist vorzugsweise die Schritte
a) Aufbringen eines Gemisches aus Binder und Partikeln als Träger auf eine Oberfläche,
b) Aufbringen von Partikeln, die zerklüftete Strukturen aufweisen, auf den Träger und
c) Fixieren der Partikel durch Härten des Trägers, auf.

Das Aufbringen des Gemisches kann z. B. durch Aufsprühen, Aufrakeln, Aufstreichen oder Aufspritzen erfolgen. Vorzugsweise wird das Gemisch in einer Dicke von 1 bis 200 µm, vorzugsweise in einer Dicke von 5 bis 100 µm und ganz besonders bevorzugt in einer Dicke von 25 bis 50 µm aufgebracht. Je nach Viskosität des Gemisches kann es vorteilhaft sein, das Gemisch vor dem Aufbringen der Partikel anhärten bzw. antrocknen zu lassen. Idealerweise wird die Viskosität des Gemisches so gewählt, dass die aufgebrachten Partikel zumindest teilweise in das Gemisch einsinken können, das Gemisch bzw. die auf ihr aufgebrachten Partikel aber nicht mehr verlaufen, wenn die Oberfläche senkrecht gestellt wird.

Das Aufbringen der Partikel kann durch gängige Verfahren wie Aufsprühen oder Bepudern erfolgen. Insbesondere kann das Aufbringen der Partikel durch Aufsprühen unter Verwendung einer elektrostatischen Sprühpistole erfolgen. Nach dem Aufbringen der Partikel können überschüssige Partikel, also Partikel die nicht an dem Gemisch haften, durch Schütteln, Abbürsten oder Abblasen von der Oberfläche entfernt werden. Diese Partikel können gesammelt und wieder eingesetzt werden.

Als Binder kann im Träger ein Lack oder Lacksystem oder ein Kleber oder Klebesystem eingesetzt werden. Vorzugsweise wird als Binder ein Lacksystem bzw. Lack eingesetzt, der zumindest Mischungen aus einfach und/oder mehrfach ungesättigten Acrylaten und/oder Methacrylaten aufweist. Die Mischungsverhältnisse können in weiten Grenzen variiert werden. Besonders bevorzugt wird ein mittels thermischer oder chemischer Energie und/oder Lichtenergie härtbarer Lack als Binder eingesetzt.

Als Binder wird vorzugsweise ein Lack oder ein Lacksystem ausgewählt, das hydrophobe Eigenschaften aufweist, wenn die eingesetzten Partikel hydrophobe Eigenschaften aufweisen.

Es kann vorteilhaft sein, wenn die als Lack für den Binder eingesetzten Mischungen Verbindungen mit funktionellen Gruppen, wie z. B. Hydroxy-Gruppen, Epoxid-Gruppen, Amin-Gruppen oder fluorhaltige Verbindungen, wie z. B. perfluorierte Ester der Acrylsäure, aufweist. Dies ist insbesondere dann vorteilhaft, wenn die Verträglichkeit (in Bezug auf die hydrophoben Eigenschaften) von Lack und hydrophoben Partikeln wie beispielsweise von Aerosil VPR 411 mittels N-[2-(Acryloyloxy)-ethyl]-N-ethylperfluoroctan-1-sulfonsäureamid aufeinander abgestimmt werden. Als Binder können nicht nur Lacke auf Acrylharz-Basis eingesetzt werden, sondern auch Lacke auf Polyurethan-Basis, oder aber Polyurethanacrylate oder Siliconacrylate. Ebenfalls sind als Binder Zweikomponentenlacksysteme oder andere reaktive Lacksysteme einsetzbar.

Zur Herstellung des als Träger eingesetzten Gemisches aus Binder und Partikeln, werden der Binder mit den Partikeln innig durchmischt. Das Durchmischen kann auf eine dem Fachmann bekannte Art und Weise erfolgen.

Das Fixieren der Partikel auf dem Träger erfolgt durch Härten des Trägers, wobei dieses, je nach verwendetem Lacksystem, vorzugsweise durch thermische und/oder chemische Energie und/oder Lichtenergie erfolgt. Das Härten des Trägers, ausgelöst durch chemische oder thermische Energie und/oder Lichtenergie, kann z. B. durch Polymerisation oder Vernetzung der Bestandteile der Lacke bzw. Lacksysteme erfolgen. Besonders bevorzugt erfolgt das Härten des Trägers durch Lichtenergie und ganz besonders bevorzugt erfolgt das Polymerisieren des Trägers durch Licht einer Hg-Mitteldrucklampe im UV-Bereich. Vorzugsweise erfolgt das Härten des Trägers unter einer Inertgas-Atmosphäre, ganz besonders bevorzugt unter einer Stickstoffatmosphäre.

Je nach Dicke der aufgebrachten härtbaren Substanz und Durchmesser der verwendeten Partikel kann es notwendig sein, die Zeit, die zwischen Aufbringen der Partikel und Härten des Trägers verstreicht, zu begrenzen, um ein vollständiges Eintauchen der Partikel in den Träger zu vermeiden. Vorzugsweise wird der Träger innerhalb von 0,1 bis 10 min, vorzugsweise innerhalb von 1 bis 5 min nach dem Aufbringen der Partikel gehärtet.

Bei der Durchführung des erfindungsgemäßen Verfahrens kann es vorteilhaft sein, Partikel einzusetzen, die hydrophobe Eigenschaften aufweisen und/oder die durch eine Behandlung mit zumindest einer Verbindung aus der Gruppe der Alkylsilane, Alkyldisilazane oder Perfluoralkylsilane, hydrophobe Eigenschaften aufweisen. Die Hydrophobierung von Partikeln ist bekannt und kann z. B. in der Schriftenreihe Pigmente, Nummer 18, der Degussa AG nachgelesen werden.

Es kann ebenso vorteilhaft sein, die Partikel nach dem Fixieren auf dem Träger mit hydrophoben Eigenschaften auszustatten. Dies kann z. B. dadurch erfolgen, dass die Partikel der behandelten Oberfläche durch eine Behandlung mit zumindest einer Verbindung aus der Gruppe der Alkylsilane, der Perfluoralkylsilane, die z. B. bei der Degussa AG zu beziehen sind, mit hydrophoben Eigenschaften ausgestattet werden. Vorzugsweise erfolgt die Behandlung dadurch, dass die Partikel aufweisende Oberfläche, die hydrophobiert werden soll, in eine Lösung, die ein Hydrophobierungsreagenz wie z. B. Alkylsilane aufweist, getaucht wird, überschüssiges Hydrophobierungsreagenz abgetropft wird und die Oberfläche bei einer möglichst hohen Temperatur getempert. Die maximal anwendbare Temperatur ist durch die Erweichungstemperaturen von Träger oder Substrat limitiert.

Das erfindungsgemäße Verfahren gemäß zumindest einem der Ansprüche 8 bis 17 kann hervorragend zur Herstellung von selbstreinigenden Oberflächen mit selbstregenerierendem Selbstreinigungseffekt auf planaren oder nichtplanaren Gegenständen, insbesondere auf nichtplanaren Gegenständen verwendet werden. Dies ist mit den herkömmlichen Verfahren nur eingeschränkt möglich. Insbesondere über Verfahren, bei denen vorgefertigte Filme auf eine Oberfläche aufgebracht werden oder bei Verfahren, bei denen eine Struktur durch Prägen erstellt werden soll, sind nichtplanare Gegenstände, wie z. B. Skulpturen, nicht oder nur eingeschränkt zugänglich. Naturgemäß kann das erfindungsgemäße Verfahren aber auch zur Herstellung von selbstreinigenden Oberflächen mit selbstregenerierendem Selbstreinigungseffekt auf Gegenständen mit planaren Oberflächen, wie z. B. Gewächshäusern oder öffentlichen Verkehrsmitteln verwendet werden. Insbesondere die Anwendung des erfindungsgemäßen Verfahrens zur Herstellung von selbstreinigenden Oberflächen an Gewächshäusern weist Vorteile auf, da mit dem Verfahren selbstreinigende Oberflächen z. B. auch auf transparenten Materialien wie Glas oder Plexiglas® hergestellt werden können und die selbstreinigende Oberfläche zumindest soweit transparent ausgebildet werden kann, dass für das Wachstum der Pflanzen im Gewächshaus genügend Sonnenlicht durch die mit einer selbstreinigenden Oberfläche ausgerüstete transparente Oberfläche dringen kann. Im Gegensatz zu herkömmlichen Gewächshäusern, die regelmäßig von Laub-, Staub-, Kalk- und biologischem Material, wie z. B. Algen, gereinigt werden müssen, können Gewächshäuser, die eine erfindungsgemäße Oberfläche gemäß einem der Ansprüche 1 bis 7, aufweisen, mit längeren Reinigungsintervallen betrieben werden.

Das erfindungsgemäße Verfahrens kann außerdem zur Herstellung von selbstreinigenden Oberflächen mit selbstregenerierendem Selbstreinigungseffekt auf nicht starren Oberflächen von Gegenständen, verwendet werden, wie z. B. Schirmen oder anderen Oberflächen die flexibel gehalten sind. Ganz besonders bevorzugt kann das erfindungsgemäße Verfahren gemäß zumindest einem der Ansprüche 8 bis 17, zur Herstellung selbstreinigender Oberflächen auf flexiblen oder unflexiblen Wänden im Sanitärbereich verwendet werden. Solche Wände können z. B. Trennwände in öffentlichen Toiletten, Wände von Duschkabinen, Schwimmbädern oder Saunen, aber auch Duschvorhänge (flexible Wand) sein.

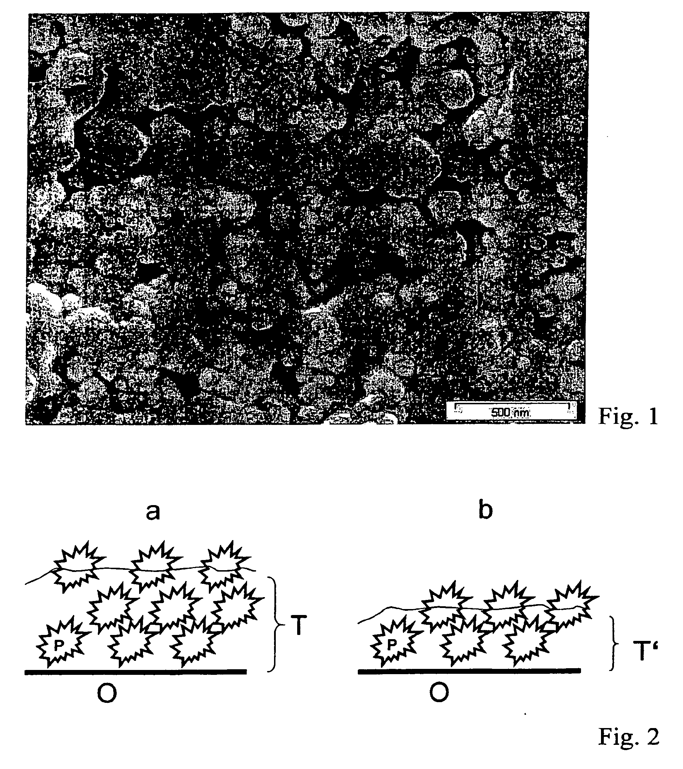

In Fig. 1 ist eine Rasterelektronenmikroskopische- (REM-) Aufnahme von einem Trägersystem mit selbstregenerierendem Selbstreinigungseffekt wiedergegeben. Es ist klar ersichtlich, dass durch den Verlust der oberflächlichen Partikel unter diesen liegende Partikel deren Funktion übernehmen und die selbstreinigende Eigenschaft damit erhalten bleibt.

In Fig. 2 ist schematisch die Funktionsweise der erfindungsgemäßen Oberfläche wiedergegeben. Auf die Oberfläche **O** sind mit einem Träger **T,** der Binder und Partikel **P** aufweist, Partikel fixiert (**a**). Wird diese Oberfläche eine Weile der Erosion ausgesetzt, erhält man eine Oberfläche **O** gemäß **b,** die eine deutlich dünnere Schicht **T'** aufweist. Man erkennt deutlich, dass die oberste Schicht von Partikeln, die durch den Träger fixiert wurden (**a**), durch die Erosion abgetragen wurden (**b**) und die Struktur der selbstreinigenden Oberfläche jetzt durch Partikel gebildet werden, die vorher in dem Träger vorhanden waren.

Die nachfolgenden Beispiele sollen die erfindungsgemäßen Oberflächen bzw. das Verfahren zur Herstellung der Oberflächen näher erläutern, ohne dass die Erfindung auf diese Ausführungsarten beschränkt sein soll.

### Beispiel 1:

20 Gew.-% Methylmethacrylat, 20 Gew.-% Pentaeritrittetraacrylat und 60 Gew.-% Hexandioldimethacrylat wurden miteinander vermischt. Bezogen auf diese Mischung werden 14 Gew.-% Plex 4092 F, ein acrylisches Copolymerisat der Röhm GmbH und 2 Gew.-% UV-Härter Darokur 1173 zugesetzt und mindestens 60 min lang gerührt. Dieser Mischung aus Binder wurde unter intensivem Rühren 8,45 Gew.-% hydrophobierte, pyrogene Kieselsäure Aerosil VPR 411 (Degussa AG) zugegeben und so lange gerührt, bis die Partikel vollständig mit dem Binder durchmischt waren und die Partikel von dem Binder vollständig benetzt waren.

Diese Mischung aus Binder und Partikel wurde als Träger auf eine 2 mm dicken PMMA-Platte in einer Dicke von 50 µm aufgetragen. Die Schicht wurde für 5 min angetrocknet. Anschließend wurden als Partikel hydrophobierte, pyrogene Kieselsäure Aerosil VPR 411 (Degussa AG) mittels einer elektrostatischen Sprühpistole aufgesprüht. Nach 3 min wurde der Träger bei einer Wellenlänge von 308 nm unter Stickstoff gehärtet. Nach dem Härten des Trägers wurde überschüssiges Aerosil VPR 411 abgebürstet. Die Charakterisierung der Oberfläche erfolgte anfänglich visuell und ist mit +++ protokolliert. +++ bedeutet, Wassertropfen bilden sich nahezu vollständig aus. Der Abrollwinkel betrug 2,6°.

### Beispiel 2:

Der Versuch aus Beispiel 1 wird wiederholt, aber an Stelle von Aerosil VPR 411 wird Aerosil R 8200 (Degussa AG), welches eine BET-Oberfläche von 200 ± 25 m²/g aufweist, eingesetzt. Die Beurteilung der Oberfläche ist +++.

### Beispiel 3:

Dem Lack aus Beispiel 1, der mit dem UV-Härter bereits vermischt wurde, wurden zusätzlich 10 Gew.-% (bezogen auf das Gesamtgewicht der Lackmischung) 2-(N-Ethylperfluoroctansulfonamido)-ethylacrylat zugesetzt. Auch dieses Gemisch wurde wieder mindestens 60 min lang gerührt. Diese Mischung wurde als Träger auf eine 2 mm dicken PMMA-Platte in einer Dicke von 50 µm aufgetragen. Die Schicht wurde für 5 min angetrocknet. Anschließend wurden als Partikel hydrophobierte, pyrogene Kieselsäure Aerosil VPR 411 (Degussa AG) mittels einer elektrostatischen Sprühpistole aufgesprüht. Nach 3 min wurde der Träger bei einer Wellenlänge von 308 nm unter Stickstoff gehärtet. Nach dem Härten des Trägers wurde überschüssiges Aerosil VPR 411 abgebürstet. Die Charakterisierung der Oberfläche erfolgte anfänglich visuell und ist mit +++ protokolliert. +++ bedeutet, Wassertropfen bilden sich nahezu vollständig aus. Der Abrollwinkel betrug 0,5°.

## Patentansprüche

1. Selbstreinigende, Oberfläche mit selbstregenerierendem Selbstreinigungseffekt, die eine künstliche, zumindest teilweise hydrophobe Oberflächenstruktur aus Erhebungen und Vertiefungen aufweist, wobei die Erhebungen und Vertiefungen durch mittels eines gehärteten Trägers auf der Oberfläche fixierten Partikel gebildet werden,
**dadurch gekennzeichnet,**
**dass** der Träger ein Gemisch aus Partikeln und Binder aufweist.

2. Selbstreinigende Oberfläche gemäß Anspruch 1,
**dadurch gekennzeichnet,**
**dass** der Binder ein mittels thermischer oder chemischer Energie oder Lichtenergie gehärteter Lack ist.

3. Selbstreinigende Oberfläche gemäß Anspruch 2,
**dadurch gekennzeichnet,**
**dass** der gehärtete Lack Mischungen aus einfach und/oder mehrfach ungesättigten Acrylaten und/oder Methacrylaten oder Polyurethan aufweist.

4. Selbstreinigende Oberfläche nach zumindest einem der Ansprüche 1 bis 3,
**dadurch gekennzeichnet,**
**dass** die Partikel eine durchschnittliche Größe von kleiner 50 µm aufweisen.

5. Selbstreinigende Oberfläche gemäß Anspruch 4,
**dadurch gekennzeichnet,**
**dass** die Partikel eine durchschnittliche Größe von kleiner 30 µm aufweisen.

6. Selbstreinigende Oberfläche gemäß zumindest einem der Ansprüche 1 bis 5,
**dadurch gekennzeichnet,**
**dass** die Partikel aus zumindest einem Material, ausgewählt aus Silikaten, dotierten Silikaten, Mineralien, Metalloxiden, Kieselsäuren, Polymeren und Metallpulvern ausgewählt sind.

7. Selbstreinigende Oberfläche gemäß Anspruch 6,
**dadurch gekennzeichnet,**
**dass** die Partikel hydrophobe Eigenschaften aufweisen.

8. Verfahren zur Herstellung von selbstreinigenden Oberflächen mit selbstregenerierendem Selbstreinigungseffekt, bei dem eine geeignete, zumindest teilweise hydrophobe Oberflächenstruktur durch Fixieren von Partikeln mittels eines Trägers auf einer Oberfläche geschaffen wird,
**dadurch gekennzeichnet,**
**dass** als Träger ein Gemisch aus Partikeln und Binder eingesetzt wird und das Fixieren der Partikel durch Härten des Trägers erfolgt.

9. Verfahren gemäß Anspruch 8,
**dadurch gekennzeichnet,**
**dass** Partikel, die zumindest ein Material, ausgewählt aus Silikaten, dotierten Silikaten, Mineralien, Metalloxiden, Kieselsäuren, Metallpulvern oder Polymeren aufweisen, eingesetzt werden.

10. Verfahren gemäß Anspruch 8 oder 9,
**dadurch gekennzeichnet,**
**dass** es die Schritte
a) Aufbringen einer härtbaren Substanz als Träger auf eine Oberfläche,
b) Aufbringen von Partikeln, auf den Träger und
c) Fixieren der Partikel durch Härten des Trägers,
aufweist.

11. Verfahren nach Anspruch 10,
**dadurch gekennzeichnet,**
**dass** das Härten des Trägers durch thermische oder chemische Energie und/oder Lichtenergie erfolgt.

12. Verfahren gemäß Anspruch 10 oder 11,
**dadurch gekennzeichnet,**
**dass** als härtbare Substanz ein Lack der zumindest Mischungen aus einfach und/oder mehrfach ungesättigten Acrylaten und/oder Methacrylaten und/oder Polyurethane und/oder Silikonacrylate und/oder Urethanacrylate aufweist, eingesetzt wird.

13. Verfahren gemäß Anspruch 12,
**dadurch gekennzeichnet,**
**dass** als härtbare Substanz ein Lack ausgewählt wird der hydrophobe Eigenschaften aufweist, wenn die eingesetzten Partikel hydrophobe Eigenschaften aufweist.

14. Verfahren gemäß zumindest einem der Ansprüche 8 bis 13,
**dadurch gekennzeichnet,**
**dass** Partikel eingesetzt werden, die hydrophobe Eigenschaften aufweisen.

15. Verfahren gemäß zumindest einem der Ansprüche 8 bis 14,
**dadurch gekennzeichnet,**
**dass** Partikel eingesetzt werden, die durch eine Behandlung mit zumindest einer Verbindung aus der Gruppe der Alkylsilane, Perfluoralkylsilane oder Alkyldisilazane, hydrophobe Eigenschaften aufweisen.

16. Verfahren gemäß zumindest einem der Ansprüche 8 bis 15,
**dadurch gekennzeichnet,**
**dass** die Partikel nach dem Fixieren auf dem Träger mit hydrophoben Eigenschaften ausgestattet werden.

17. Verfahren gemäß Anspruch 16,
**dadurch gekennzeichnet,**
**dass** die Partikel durch eine Behandlung mit zumindest einer Verbindung aus der Gruppe der Alkylsilane, Perfluoralkylsilane oder Alkyldisilazane, mit hydrophoben Eigenschaften ausgestattet werden.

18. Verwendung des Verfahrens gemäß zumindest einem der Ansprüche 8 bis 17, zur Herstellung von selbstreinigenden Oberflächen auf planaren oder nichtplanaren Gegenständen.

19. Verwendung des Verfahrens gemäß zumindest einem der Ansprüche 8 bis 17, zur Herstellung von selbstreinigenden Oberflächen auf nicht starren Oberflächen von Gegenständen.

20. Verwendung des Verfahrens gemäß zumindest einem der Ansprüche 8 bis 17, zur Herstellung von selbstreinigenden Oberflächen auf flexiblen oder unflexiblen Wänden im Sanitärbereich.

## Claims

1. A self-cleaning surface with a self-regenerating self-cleaning effect, and having an artificial, at least to some extent hydrophobic, surface structure made from elevations and depressions, the elevations and depressions being formed by particles secured to the surface by means of a cured carrier,
**characterized in that**
the carrier is a mixture made from particles and binder.

2. A self-cleaning surface according to claim 1,
**characterized in that**
the binder is a surface coating cured by means of thermal or chemical energy, or the energy in light.

3. A self-cleaning surface according to claim 2,
**characterized in that**
the cured surface coating comprises a mixture made from mono- and/or polyunsaturated acrylates and/or methacrylates or polyurethane.

4. A self-cleaning surface according to at least one of claims 1 to 3,
**characterized in that**
the particles have an average size of less than 50 µm.

5. A self-cleaning surface according to claim 4,
**characterized in that**
the particles have an average size of less than 30 µm.

6. A self-cleaning surface according to at least one of claims 1 to 5,
**characterized in that**
the particles have been selected from at least one material selected from the group consisting of silicates, doped silicates, minerals, metal oxides, silicas, polymers, and metal powders.

7. A self-cleaning surface according to claim 6,
**characterized in that**
the particles have hydrophobic properties.

8. A process for producing a self-cleaning surface with self-regenerating self-cleaning effect, by achieving a suitable, at least to some extent hydrophobic, surface structure on a surface by securing particles by means of a carrier,
**characterized in that**
a mixture of particles and binder is used as carrier and the particles are secured by curing the carrier.

9. A process according to-claim 8,
**characterized in that**
use is made of particles which have at least one material selected from the group consisting of silicates, doped silicates, minerals, metal oxides, silicas, metal powders, and polymers.

10. A process according to claim 8 or 9,
**characterized in that**
the process has the steps of
a) applying a curable substance as carrier to a surface,
b) applying particles to the carrier, and
c) securing the particles by curing the carrier.

11. A process according to claim 10,
**characterized in that**
the carrier is cured by thermal or chemical energy and/or the energy in light.

12. A process according to claim 10 or 11,
**characterized in that**
a surface coating which at least comprises a mixture made from mono- and/or polyunsaturated acrylates and/or methacrylates and/or comprises polyurethanes and/or silicone acrylates and/or urethane acrylates is used as curable substance.

13. A process according to claim 12,
**characterized in that**
if the particles used have hydrophobic properties, the curable substance selected comprises a surface coating which has hydrophobic properties.

14. A process according to at least one of claims 8 to 13,
**characterized in that**
use is made of particles which have hydrophobic properties.

15. A process according to at least one of claims 8 to 14,
**characterized in that**
use is made of particles which have hydrophobic properties as a result of treatment with at least one compound selected from the group consisting of the alkylsilanes, perfluoroalkylsilanes, and alkyldisilazanes.

16. A process according to at least one of claims 8 to 15,
**characterized in that**
the particles are equipped with hydrophobic properties after the process of securing to the carrier.

17. A process according to claim 16,
**characterized in that**
the particles are equipped with hydrophobic properties as a result of treatment with at least one compound from the group consisting of the alkylsilanes, perfluoroalkylsilanes, and alkylsilazanes.

18. The use of the process according to at least one of claims 8 to 17, for producing a self-cleaning surface on a planar or non-planar article.

19. The use of the process according to at least one of claims 8 to 17, for producing a self-cleaning surface on a non-rigid surface of an article.

20. The use of the process according to at least one of claims 8 to 17, for producing a self-cleaning surface on a flexible or non-flexible.partition in the sanitary sector.

## Revendications

1. Surface auto-nettoyante dotée d'un effet auto-nettoyant auto-régénérant, qui présente une structure superficielle artificielle, au moins partiellement hydrophobe composée de saillies et de cavités, les saillies et les cavités étant formés au moyen d'un support durci sur les particules fixées à la surface,
**caractérisée en ce que**
le support présente un mélange de particules et de liant.

2. Surface auto-nettoyante selon la revendication 1,
**caractérisée en ce que**
le liant est un vernis durci au moyen de l'énergie thermique ou chimique ou de l'énergie de la lumière.

3. Surface auto-nettoyante selon la revendication 2,
**caractérisée en ce que**
le vernis durci présente des mélanges composés d'acrylates et/ou de méthacrylates monoinsaturés et/ou polyinsaturés ou de polyuréthane.

4. Surface auto-nettoyante selon au moins l'une des revendications 1 à 3,
**caractérisée en ce que**
les particules présentent une taille moyenne inférieure à 50 µm.

5. Surface auto-nettoyante selon la revendication 4,
**caractérisée en ce que**
les particules présentent une taille moyenne inférieure à 30 µm.

6. Surface auto-nettoyante selon au moins l'une des revendications 1 à 5,
**caractérisée en ce qu'**
on choisit les particules composées d'au moins un matériau choisi parmi les silicates, les silicates dopés, les minéraux, les oxydes métalliques, les acides siliciques, les polymères et les poudres métalliques.

7. Surface auto-nettoyante selon la revendication 6,
**caractérisée en ce que**
les particules présentent des propriétés hydrophobes.

8. Procédé pour fabriquer des surfaces auto-nettoyantes dotées d'un effet auto-nettoyant auto-régénérant, selon lequel on produit une structure superficielle au moins partiellement hydrophobe appropriée en fixant les particules au moyen d'un support sur une surface,
**caractérisé en ce que**
comme support on utilise un mélange de particules et de liant, et la fixation des particules est réalisée par durcissement du support.

9. Procédé selon la revendication 8,
**caractérisé en ce qu'**
on utilise des particules qui présentent au moins un matériau choisi parmi les silicates, les silicates dopés, les minéraux, les oxydes métalliques, les acides siliciques, les poudres métalliques ou les polymères.

10. Procédé selon la revendication 8 ou 9,
**caractérisé en ce qu'**
il présente les étapes consistant à :
a) appliquer, en tant que support, une substance durcissable sur une surface,
b) appliquer des particules sur le support, et
c) fixer les particules par durcissement du support.

11. Procédé selon la revendication 10,
**caractérisé en ce qu'**
on effectue le durcissement du support par énergie thermique ou chimique et/ ou énergie de la lumière.

12. Procédé selon la revendication 10 ou 11,
**caractérisé en ce que**
comme substance durcissable on utilise un vernis qui présente au moins des mélanges composés d'acrylates et/ou de méthacrylates monoinsaturés et/ou polyinsaturés et/ou de polyuréthane et/ou de silicium acrylates et/ou d'uréthane acrylates.

13. Procédé selon la revendication 12,
**caractérisé en ce que**
comme substance durcissable on choisit un vernis qui présente des propriétés hydrophobes lorsque les particules utilisées présentent des propriétés hydrophobes.

14. Procédé selon au moins l'une des revendications 8 à 13,
**caractérisé en ce qu'**
on utilise des particules qui présentent des propriétés hydrophobes.

15. Procédé selon au moins l'une des revendications 8 à 14,
**caractérisé en ce qu'**
on utilise des particules qui présentent des propriétés hydrophobes au moyen d'un traitement avec au moins un composé du groupe des alkylsilanes, des perfluoroalkylsilanes ou des alkyldisilazanes.

16. Procédé selon au moins l'une des revendications 8 à 15,
**caractérisé en ce que**
les particules après fixation sur le support sont dotées de propriétés hydrophobes.

17. Procédé selon la revendication 16,
**caractérisé en ce que**
les particules sont dotées de propriétés hydrophobes au moyen d'un traitement avec au moins un composé du groupe des alkylsilanes, des perfluoroalkylsilanes ou des alkyldisilazanes.

18. Utilisation du procédé selon au moins l'une des revendications 8 à 17, pour fabriquer des surfaces auto-nettoyantes sur des objets plats ou non plats.

19. Utilisation du procédé selon au moins l'une des revendications 8 à 17, pour fabriquer des surfaces auto-nettoyantes sur des surfaces non rigides d'objets.

20. Utilisation du procédé selon au moins l'une des revendications 8 à 17, pour fabriquer des surfaces auto-nettoyantes sur des parois flexibles et non flexibles dans le domaine sanitaire.
